# EUROPÄISCHE PATENTANMELDUNG

(11) **EP 4 649 793 A1**
(43) Veröffentlichungstag der Anmeldung: **19.11.2025**
(21) Anmeldenummer: 24176742.5
(22) Anmeldetag: 17.05.2024
(51) Int. Cl.: A01B 23/02, A01B 35/26, A01B 39/18

(54) **HACKSCHAR**

(71) Anmelder: Jäkel GmbH & Co. KG Maschinenmesserfabrik, 34474 Diemelstadt (DE)
(72) Erfinder: VÖLKER, Walter, 34613 Schwalmstadt (DE); FISSELER, Karl-Werner, 34519 Diemelsee (DE); SCHIEBERLE, Marc, 34439 Willebadessen (DE); SCHWARTE, Stefan Dr.-Ing, 34414 Warburg (DE)
(74) Vertreter: Schäperklaus, Jochen

(57) **Zusammenfassung**

Die Erfindung betrifft eine Hackschar (100; 300; 500; 700), umfassend einen Befestigungsabschnitt (103), einen Übergangsabschnitt (104) einen ersten Bodenbearbeitungsabschnitt (101) und einen zweiten Bodenbearbeitungsabschnitt (102), wobei der Befestigungsabschnitt (103) für eine Befestigung an einer Zugmaschine ausgebildet ist, wobei der Befestigungsabschnitt (103) über den Übergangsabschnitt (104) in die Bodenbearbeitungsabschnitte (101; 102) übergeht, wobei sich der Befestigungsabschnitt (103) mit seiner größten Ausdehnungsrichtung ausgehend von vom Übergangsabschnitt (104) in einer Längsrichtung nach vorne und in einer Höhenrichtung nach oben erstreckt, wobei sich die Bodenbearbeitungsabschnitte (101; 102) mit ihrer jeweiligen größten Ausdehnungsrichtung ausgehend vom Übergangsabschnitt (104) in der Längsrichtung nach hinten erstrecken, wobei die Bodenbearbeitungsabschnitte (101; 102) in einer Querrichtung ausgehend vom Übergangsabschnitt (104) auseinander laufen, wobei am Befestigungsabschnitt (103) ein sich in der Längsrichtung nach vorne erstreckender Vorsprung (108) angeordnet ist.

## Beschreibung

Die vorliegende Erfindung betrifft eine Hackschar gemäß Anspruch 1.

Aus dem Stand der Technik sind Hackschare bekannt, die verwendet werden, um den Erdboden aufzulockern. Sie unterscheiden sich von Pflugscharen insbesondere durch die geringere Eindringtiefe in den Erdboden bei der Benutzung.

Hackschare werden häufig zur Unkrautbeseitigung verwendet, um die Verwendung von chemischen Unkrautbeseitungsmitteln wie Glyphosat zu verzichten oder ihre Verwendung zumindest zu beschränken. Dies kann insbesondere als mechanische Beikrautbekämpfung bezeichnet werden.

Aus RU 156 067 U1 ist eine Schar bekannt, die bei der Verwendung durch den Boden gedrückt wird. Sie ist mehrteilig aufgebaut und weist zwei Bodenbearbeitungsabschnitte auf, deren Abstand voneinander sich ausgehend vom Befestigungsteil vergrößert. Am Befestigungsteil ist als Bestandteil einer Ständervorrichtung ein Vorsprung angeordnet.

Demgegenüber liegt der vorliegenden Erfindung die Aufgabe zugrunde, eine verbesserte Hackschar, ein System mit einer solchen Hackschar und ein Verfahren unter Verwendung einer solchen Hackschar zu schaffen.

Diese Aufgabe wird durch eine Hackschar gemäß Anspruch 1, ein System gemäß Anspruch 12 und ein Verfahren gemäß Anspruch 14 gelöst. Ausführungsformen der Erfindung sind in den abhängigen Ansprüchen angegeben.

Die Hackschar umfasst einen Befestigungsabschnitt, einen Übergangsabschnitt, einen ersten Bodenbearbeitungsabschnitt und einen zweiten Bodenbearbeitungsabschnitt. Die Bodenbearbeitungsabschnitte können beispielsweise dazu ausgebildet sein, durch Erdboden gezogen zu werden und dabei den Erdboden aufzulockern. Der Befestigungsabschnitt ist für eine Befestigung an einer Zugmaschine ausgebildet. Beispielsweise kann die Befestigung an der Zugmaschine über ein Gestell erfolgen. Beispielsweise kann der Befestigungsabschnitt an das Gestell geschraubt werden. Die Zugmaschine kann beispielsweise ein Kraftfahrzeug, insbesondere ein Traktor, sein.

Der Befestigungsabschnitt geht über den Übergangsabschnitt in die Bodenbearbeitungsabschnitte über. Beispielsweise kann der Befestigungsabschnitt mit einer Krümmung in den Übergangsabschnitt übergehen. Der Übergangsabschnitt kann beispielsweise glatt, insbesondere ohne Krümmung oder Kante, in die Bodenbearbeitungsabschnitte übergehen. Dies kann insbesondere für einen äußeren Rand des Übergangsabschnitts und einen äußeren Rand des zweiten Bodenbearbeitungsabschnitts gelten. Es ist insbesondere möglich, dass der Befestigungsabschnitt direkt in den Übergangsabschnitt übergeht. Es ist insbesondere auch möglich, dass der Übergangsabschnitt direkt in die Bodenbearbeitungsabschnitte übergeht.

Der Befestigungsabschnitt erstreckt sich mit seiner größten Ausdehnungsrichtung ausgehend vom Übergangsabschnitt in einer Längsrichtung nach vorne und in einer Höhenrichtung nach oben. Dabei wird unter der größten Ausdehnungsrichtung im Rahmen dieser Beschreibung jeweils die Richtung verstanden, in der das jeweilige Bauteil seine größte Ausdehnung aufweist. Unter der Längsrichtung wird im Rahmen dieser Beschreibung insbesondere eine horizontale Richtung in dem Zustand verstanden, wenn die Bodenbearbeitungsabschnitte auf einer ebenen Fläche aufliegen. Unter der Höhenrichtung wird im Rahmen dieser Beschreibung insbesondere eine vertikale Richtung in dem gleichen Zustand verstanden.

Die Bodenbearbeitungsabschnitte erstrecken sich mit ihrer jeweiligen größten Ausdehnungsrichtung ausgehend vom Übergangsabschnitt in der Längsrichtung nach hinten. Außerdem können sich die Bodenbearbeitungsabschnitte jeweils mit ihrer zweitgrößten Ausdehnungsrichtung in einer Querrichtung erstrecken. Dabei wird im Rahmen dieser Beschreibung unter der Querrichtung insbesondere eine horizontale Richtung, die senkrecht zur Längsrichtung verläuft, in dem Zustand verstanden, wenn die Bodenbearbeitungsabschnitte auf einer ebenen Fläche aufliegen.

Die Bodenbearbeitungsabschnitte laufen in der Querrichtung ausgehend vom Übergangsabschnitt auseinander. Beispielsweise kann sich ein Abstand der Bodenbearbeitungsabschnitte in der Querrichtung voneinander vergrößern je größer ihre Distanz zum Übergangsabschnitt wird.

Am Befestigungsabschnitt ist ein sich in der Längsrichtung nach vorne erstreckender Vorsprung angeordnet. Der Vorsprung kann beispielsweise abgerundet ausgebildet sein. Beispielsweise kann der Befestigungsabschnitt einen Grundkörper umfassen, an dem der Vorsprung direkt angeordnet ist. Der Vorsprung kann sich ausgehend vom Grundkörper, insbesondere mit seiner größten Ausdehnungsrichtung, beispielsweise in der Längsrichtung nach vorne erstrecken. Es ist bevorzugt, dass der Vorsprung in einem unteren Bereich des Befestigungsabschnitts angeordnet ist, beispielsweise im untersten Drittel oder im untersten Viertel. Der Vorsprung ist insbesondere vorteilhaft, um den Erdboden bei Verwendung der Hackschar aufzubrechen.

Die Hackschar wird bei ihrer Verwendung mit dem Befestigungsabschnitt an der Zugmaschine befestigt und von der Zugmaschine zumindest mit den Bodenbearbeitungsabschnitten durch den Erdboden gezogen. Das Ziehen ist vorteilhaft, wenn beispielsweise Hindernisse wie Steine die Bewegung der Bodenbearbeitungsabschnitte durch den Erdboden behindern. Beim Ziehen können die Bodenbearbeitungsabschnitte beispielsweise über die Hindernisse gezogen werden, wohingegen sie bei einem Schiebevorgang gegen die Hindernisse gedrückt würden.

Für den Ziehvorgang ist es vorteilhaft, dass der Befestigungsabschnitt sich mit seiner größten Ausdehnungsrichtung nach vorne und in der Höhenrichtung nach oben erstreckt. Außerdem ist der Vorsprung vorteilhaft, um den Erdboden aufzubrechen, bevor er dann durch die Bodenbearbeitungsabschnitte aufgelockert wird. Die Verwendung der beiden Bodenbearbeitungsabschnitte ist aus Gründen der Kräfteverteilung und für die Bearbeitung einer großen Fläche des Erdbodens vorteilhaft.

Die Bodenbearbeitungsabschnitte können insbesondere an ihren in der Längsrichtung vorderen Rändern scharfkantig ausgebildet sein. Deshalb kann die Hackschar auch als Hackmesser bezeichnet werden.

Es ist auch möglich, dass die Hackschar eine Verschleißschutzbeschichtung aufweist. Insbesondere die Bodenbearbeitungsabschnitte können jeweils eine solche Verschleißschutzbeschichtung aufweisen. Die Verschleißschutzbeschichtung kann als Laserauftrag oder Hartmetall ausgebildet sein.

Nach einer Ausführungsform der Erfindung kann sich der Übergangsabschnitt ausgehend vom Befestigungsabschnitt mit seiner größten Ausdehnungsrichtung in der Querrichtung erstrecken. Es ist insbesondere möglich, dass der Übergangsabschnitt ausschließlich an einer Seite des Befestigungsabschnitts angeordnet ist. Vorzugsweise erstreckt sich der Übergangsabschnitt in der Längsrichtung nicht über die Enden des Befestigungsabschnitts hinaus. Die zweitgrößte Ausdehnung des Übergangsabschnitt kann beispielsweise in der Längsrichtung verlaufen.

Nach einer Ausführungsform der Erfindung können die Bodenbearbeitungsabschnitte in einer Ebene liegen. Es ist möglich, dass auch der Übergangsabschnitt in dieser Ebene liegt. Der Befestigungsabschnitt kann aus der Ebene hervorstehen.

Nach einer Ausführungsform der Erfindung kann der Vorsprung dazu ausgebildet sein, einen Erdboden aufzubrechen, wenn die Bodenbearbeitungsabschnitte den Erdboden auflockern.

Nach einer Ausführungsform der Erfindung kann der Vorsprung in der Höhenrichtung um weniger als 5 Zentimeter von den Bodenbearbeitungsabschnitten beabstandet sein. Dabei kann der Vorsprung zusätzlich dazu noch in der Längs- und/oder in der Querrichtung von den Bodenbearbeitungsabschnitten beabstandet sein. Die geringe Distanz in der Höhenrichtung ist vorteilhaft, damit der Vorsprung den Erdboden bei der Verwendung der Hackschar aufbricht.

Nach einer Ausführungsform der Erfindung kann die Hackschar einteilig und/oder einstückig ausgebildet sein. Dies ist insbesondere vorteilhaft für die mechanische Stabilität. Beispielsweise kann die Hackschar aus einem einzigen Materialstück gefertigt sein. In diesem Fall kann der Befestigungsabschnitt vom Übergangsabschnitt weg gebogen sein.

Nach einer Ausführungsform der Erfindung kann der Befestigungsabschnitt mehrere Ausnehmungen aufweisen. Dabei kann es sich beispielsweise um Löcher handeln. Die Ausnehmungen können zur Befestigung der Hackschar an der Zugmaschine verwendbar sein. Es ist insbesondere möglich, dass Befestigungselemente, wie beispielsweise Schrauben, durch die Ausnehmungen hindurchführbar sind, um die Hackschar an der Zugmaschine zu befestigen.

Nach einer Ausführungsform der Erfindung können die Bodenbearbeitungsabschnitte einen Winkel zwischen 10° und 90°, insbesondere zwischen 20° und 50°, zwischen sich einschließen.

Nach einer Ausführungsform der Erfindung kann die Hackschar frei von einer Schweißverbindung sein. Dies ist vorteilhaft für die mechanische Stabilität.

Nach einer Ausführungsform der Erfindung kann zwischen dem ersten Bodenbearbeitungsabschnitt und dem Übergangsabschnitt eine erste Einkerbung angeordnet sein. Dies ist bei der Herstellung insbesondere vorteilhaft, um den Befestigungsabschnitt vom Übergangsabschnitt weg beigen zu können.

Nach einer Ausführungsform der Erfindung kann zwischen dem ersten und dem zweiten Bodenbearbeitungsabschnitt eine zweite Einkerbung angeordnet sein. Diese Einkerbung ist insbesondere vorteilhaft für eine leichtgängigere Bewegung der Bodenbearbeitungsabschnitte durch den Erdboden und um Gewicht einzusparen.

Das System gemäß Anspruch 12 umfasst eine Zugmaschine und eine Hackschar nach einer Ausführungsform der Erfindung. Die Hackschar ist mit dem Befestigungsabschnitt, beispielsweise über ein Gestell, an der Zugmaschine befestigt. Die Zugmaschine ist dazu ausgebildet, die Hackschar durch den Erdboden zu ziehen. Dabei wird im Rahmen dieser Beschreibung unter dem Erdboden insbesondere Erde als Material verstanden. Es kann sich beispielsweise um die oberste Schicht der Erdkruste handeln.

Nach einer Ausführungsform der Erfindung kann das System Befestigungselemente umfassen. Dies können beispielsweise Schrauben sein. Die Hackschar kann über die durch die Ausnehmungen hindurch ragenden Befestigungselemente, insbesondere über ein Gestell, an der Zugmaschine befestigt sein.

Das Verfahren zur Bodenbearbeitung gemäß Anspruch 14 wird mit einem System nach einer Ausführungsform der Erfindung durchgeführt. Die Zugmaschine zieht dabei die Hackschar. Die Bodenbearbeitungsabschnitte lockern währenddessen den Erdboden auf und der Vorsprung bricht den Erdboden auf. Aufgrund der Anordnung des Vorsprungs in der Längsrichtung vor den Bodenbearbeitungsabschnitten bricht der Vorsprung einen Abschnitt des Erdbodens zunächst auf, bevor dieser Abschnitt des Erdbodens von den Bodenbearbeitungsabschnitten aufgelockert wird.

Weitere Merkmale und Vorteile von Ausführungsbeispielen der Erfindung werden unter Bezugnahme auf die Zeichnungen nachfolgend beschrieben. Dabei werden für gleiche oder ähnliche Teile und für Teile mit gleichen oder ähnlichen Funktionen dieselben Bezugszeichen verwendet. Es zeigen:

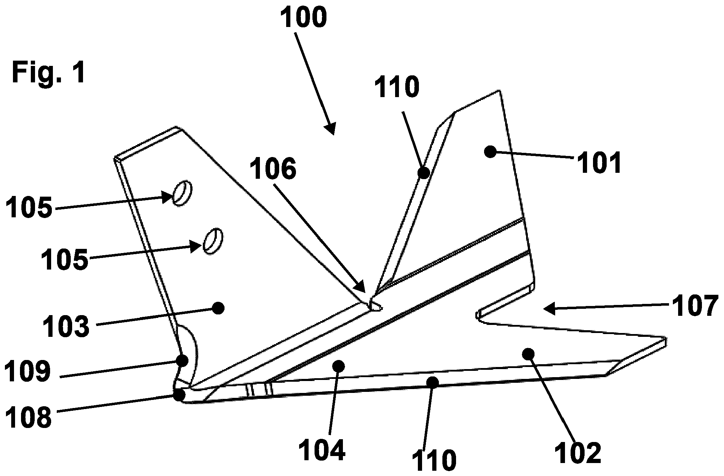

- Fig. 1: eine schematische perspektivische Ansicht einer Hackschar nach einer Ausführungsform der Erfindung;

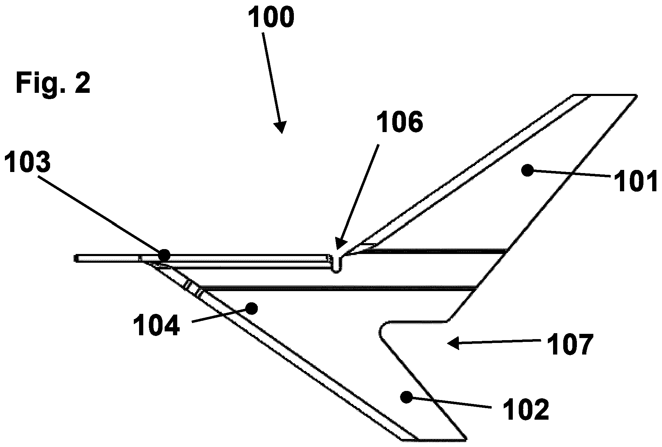

- Fig. 2: eine schematische Draufsicht auf die Hackschar aus Fig. 1;

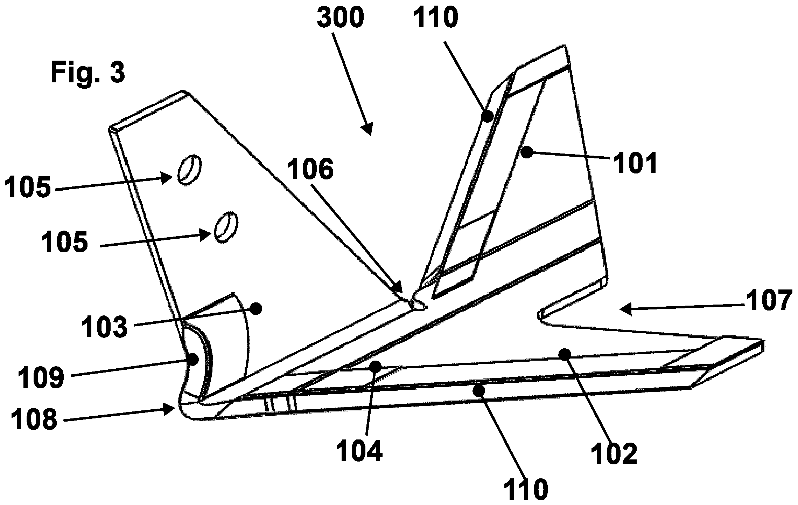

- Fig. 3: eine schematische perspektivische Ansicht einer Hackschar nach einer weiteren Ausführungsform der Erfindung;

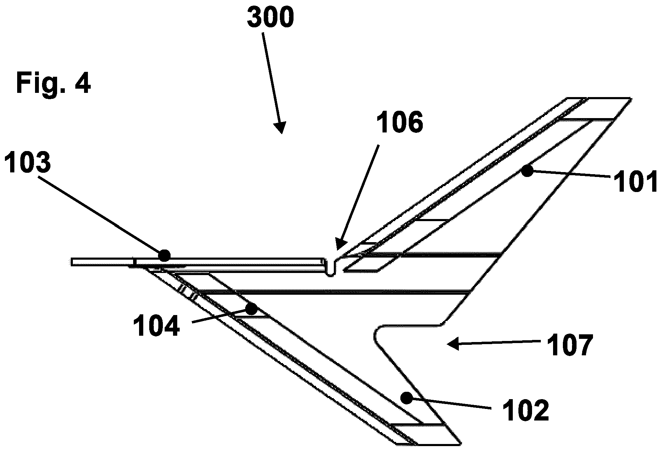

- Fig. 4: eine schematische Draufsicht auf die Hackschar aus Fig. 3;

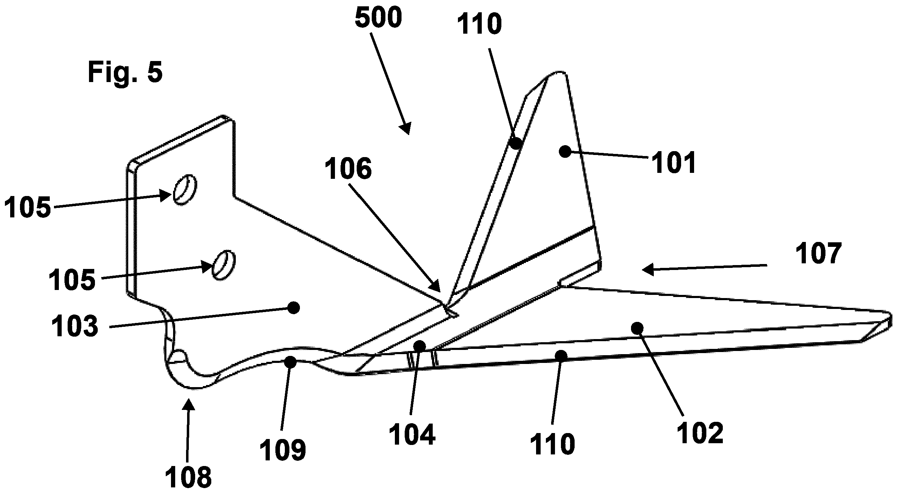

- Fig. 5: eine schematische perspektivische Ansicht einer Hackschar nach einer weiteren Ausführungsform der Erfindung;

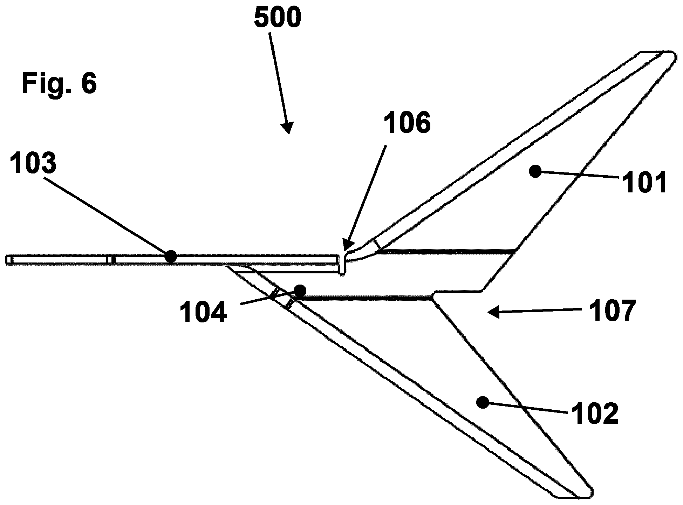

- Fig. 6: eine schematische Draufsicht auf die Hackschar aus Fig. 5;

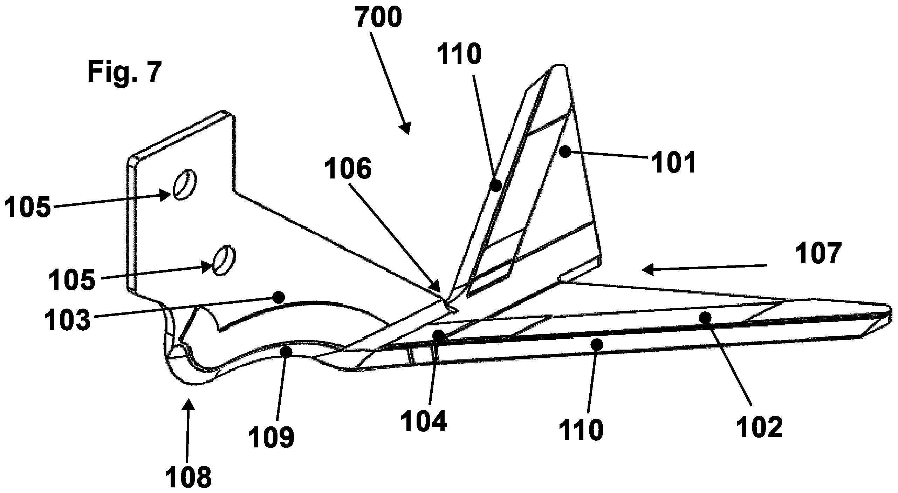

- Fig. 7: eine schematische perspektivische Ansicht einer Hackschar nach einer weiteren Ausführungsform der Erfindung; und

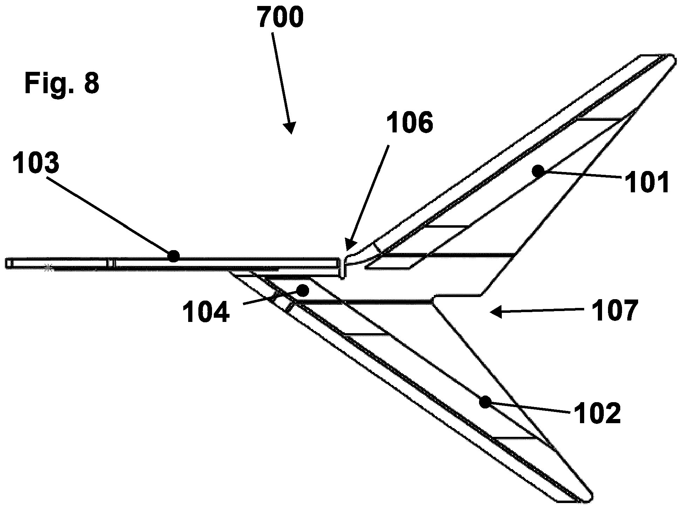

- Fig. 8: eine schematische Draufsicht auf die Hackschar aus Fig. 7.

Es ist nicht notwendig, dass eine erfindungsgemäße Vorrichtung alle nachfolgend beschriebenen Merkmale aufweist. Es ist auch möglich, dass eine erfindungsgemäße Vorrichtung nur einzelne Merkmale der nachfolgend beschriebenen Ausführungsbeispiels aufweist.

Die verschiedenen Hackscharen 100, 300, 500 und 700 unterscheiden sich in den Ausgestaltungen der einzelnen Merkmale. Im Prinzip weisen jedoch alle Hackschare 100, 300, 500 und 700 die gleichen Merkmale auf, funktionieren auf die gleiche Weise und werden auf die gleiche Weise verwendet.

Die Hackscharen 100, 300, 500 und 700 umfassen jeweils einen ersten Bodenbearbeitungsabschnitt 101, einen zweiten Bodenbearbeitungsabschnitt 102, einen Befestigungsabschnitt 103 und einen Übergangsabschnitt 104. Am Befestigungsabschnitt 103 sind zwei Löcher als Ausnehmungen 105 angeordnet, mit denen die Hackscharen 100, 300, 500 und 700 an einem Gestell einer Zugmaschine, beispielsweise eines Traktors, befestigbar sind.

Zwischen dem ersten Bodenbearbeitungsabschnitt 101 und dem Übergangsabschnitt 104 ist eine erste Einkerbung 106 angeordnet. Zwischen dem ersten Bodenbearbeitungsabschnitt 101 und dem zweiten Bodenbearbeitungsabschnitt 102 ist eine zweite Einkerbung 107 angeordnet. Am Befestigungsabschnitt 103 ist ein Vorsprung 108 angeordnet. Der Vorsprung 108 erstreckt sich dabei mit seiner größten Ausdehnungsrichtung in der Längsrichtung nach vorne.

Im am Gestell befestigten Zustand der Hackscharen 100, 300, 500 und 700 erstreckt sich der Befestigungsabschnitt 103 ausgehend von den Ausnehmungen 105 mit seiner größten Ausdehnungsrichtung schräg nach hinten unten. Am unteren Ende des Befestigungsabschnitts 103 geht der Befestigungsabschnitt 103 in den Übergangsabschnitt 104 über. Der Übergangsabschnitt 104 erstreckt sich ausgehend vom Befestigungsabschnitt 103 mit seiner größten Ausdehnungsrichtung in der Querrichtung ausschließlich auf einer Seite des Befestigungsabschnitts 103 und ragt in der Längsrichtung nicht über den Befestigungsabschnitt 103 hinaus.

Vom Übergangsabschnitt 104 ausgehend erstreckt sich der erste Bodenbearbeitungsabschnitt 101 mit seiner größten Ausdehnungsrichtung schräg nach hinten rechts. Der zweite Bodenbearbeitungsabschnitt 102 erstreckt sich mit seiner größten Ausdehnungsrichtung ausgehend vom Übergangsabschnitt 104 schräg nach hinten links. Dabei stehen die beiden Bodenbearbeitungsabschnitte 101 und 102 in ihren vorderen Bereichen direkt miteinander in Kontakt, wohingegen sie in ihren hinteren Bereichen voneinander beabstandet sind. Die beiden Bodenbearbeitungsabschnitte 101 und 102 verlaufen also ausgehend vom Übergangsabschnitt 104 auseinander, sodass am hinteren Ende eine Lücke vorhanden ist. Die Größe der Lücke ist dabei umso größer, desto größer die Distanz zum Übergangsabschnitt 104 ist. Der erste Bodenbearbeitungsabschnitt 101 ragt dabei weiter nach hinten als der zweite Bodenbearbeitungsabschnitt 102. Der erste Bodenbearbeitungsabschnitt 101 stellt somit das hintere Ende der Hackscharen 100, 300, 500 und 700 dar.

Eine gespiegelte Ausgestaltung der Bodenbearbeitungsabschnitte 101 und 102 ist dabei ebenfalls möglich, obwohl er in den Figuren nicht dargestellt ist. In diesem Fall erstreckt sich der erste Bodenbearbeitungsabschnitt 101 mit seiner größten Ausdehnungsrichtung schräg nach hinten links und der zweite Bodenbearbeitungsabschnitt 102 mit seiner größten Ausdehnungsrichtung schräg nach hinten recht.

Der Übergangsabschnitt 104 und die beiden Bodenbearbeitungsabschnitte 101 und 102 können dabei in einer Ebene liegen, die sich in der Längs- und der Querrichtung erstreckt. Der Normalenvektor der Ebene verläuft also in der Höhenrichtung.

Der äußere Rand des Übergangsabschnitts 104, der vom Befestigungsabschnitt 103 weg weist und somit einen äußeren Rand der Hackschar 100, 300, 500 und 700 darstellt, stellt eine geradlinige Verlängerung des äußeren Rands des zweiten Bodenbearbeitungsabschnitts 102 dar.

Im am Gestell der Zugmaschine befestigten Zustand werden die Hackscharen 100, 300, 500 und 700 jeweils durch den Erdboden gezogen, um den Erdboden aufzulockern. Dabei werden die Bodenbearbeitungsabschnitte 101 und 102 durch den Erdboden gezogen. Der Vorsprung 108 bricht den Erdboden auf, bevor der Erdboden durch die Bodenbearbeitungsabschnitte 101 und 102 aufgelockert wird.

Die erste Einkerbung 106 ist für die Herstellung der Hackscharen 100, 300, 500 und 700 vorteilhaft, damit der Übergangsabschnitt 104 vom Befestigungsabschnitt 103 oder umgekehrt weg gebogen werden kann. Dies ist insbesondere vorteilhaft für die einteilige und/oder einstückige Ausgestaltung der Hackscharen 100, 300, 500 und 700 ohne Schweißverbindung und damit für ihre mechanische Stabilität und Langlebigkeit.

Die zweite Einkerbung 107 zwischen den Bodenbearbeitungsabschnitten 101 und 102 ist vorteilhaft für einen geringeren mechanischen Widerstand bei der Bewegung der Bodenbearbeitungsabschnitte 101 und 102 durch den Erdboden. Außerdem stellt die zweite Einkerbung 107 den Beginn des Bereichs dar, in dem die Bodenbearbeitungsabschnitte 101 und 102 voneinander beabstandet sind, ohne sich direkt zu berühren. Hinter der zweiten Einkerbung 107 ist die oben erwähnte Lücke vorhanden. Vor der zweiten Einkerbung 107 berühren die Bodenbearbeitungsabschnitte 101 und 102 einander direkt.

An den vorderen Rändern der Bodenbearbeitungsabschnitte 101 und 102 sind jeweils scharfkantige Schneiden 110 angeordnet, um das Eindringen der Hackscharen 100, 300, 500 und 700 in den Erdboden zu erleichtern und eventuell vorhandenes Unkraut zu zerschneiden. Am Befestigungsabschnitt ist eine scharfkantige Schneide 109 angeordnet, die am Vorsprung 108, direkt oberhalb des Vorsprungs 108 oder direkt unterhalb des Vorsprungs 108 angeordnet sein kann. Auch die Schneide 109 erleichtert das Eindringen der Hackscharen 100, 300, 500 und 700 in den Erdboden. Die Schneiden 110 und 109 sind jedoch lediglich optional. Die Hackscharen 100, 300, 500 und 700 können auch ohne die Schneiden 109 und 110 hergestellt und verwendet werden.

## Patentansprüche

1. Hackschar (100; 300; 500; 700), umfassend einen Befestigungsabschnitt (103), einen Übergangsabschnitt (104) einen ersten Bodenbearbeitungsabschnitt (101) und einen zweiten Bodenbearbeitungsabschnitt (102), wobei der Befestigungsabschnitt (103) für eine Befestigung an einer Zugmaschine ausgebildet ist, wobei der Befestigungsabschnitt (103) über den Übergangsabschnitt (104) in die Bodenbearbeitungsabschnitte (101; 102) übergeht, wobei sich der Befestigungsabschnitt (103) mit seiner größten Ausdehnungsrichtung ausgehend von vom Übergangsabschnitt (104) in einer Längsrichtung nach vorne und in einer Höhenrichtung nach oben erstreckt, wobei sich die Bodenbearbeitungsabschnitte (101; 102) mit ihrer jeweiligen größten Ausdehnungsrichtung ausgehend vom Übergangsabschnitt (104) in der Längsrichtung nach hinten erstrecken, wobei die Bodenbearbeitungsabschnitte (101; 102) in einer Querrichtung ausgehend vom Übergangsabschnitt (104) auseinander laufen, wobei am Befestigungsabschnitt (103) ein sich in der Längsrichtung nach vorne erstreckender Vorsprung (108) angeordnet ist.

2. Hackschar (100; 300; 500; 700) nach Anspruch 1, **dadurch gekennzeichnet, dass** sich der Übergangsabschnitt (104) ausgehend vom Befestigungsabschnitt (103) mit seiner größten Ausdehnungsrichtung in der Querrichtung erstreckt.

3. Hackschar (100; 300; 500; 700) nach einem der vorherigen Ansprüche, **dadurch gekennzeichnet, dass** die Bodenbearbeitungsabschnitte (101; 102) in einer Ebene liegen, wobei der Befestigungsabschnitt (103) aus der Ebene hervorsteht.

4. Hackschar (100; 300; 500; 700) nach einem der vorherigen Ansprüche, **dadurch gekennzeichnet, dass** der Vorsprung (108) dazu ausgebildet ist, einen Erdboden aufzubrechen, wenn die Bodenbearbeitungsabschnitte (101; 102) den Erdboden auflockern.

5. Hackschar (100; 300; 500; 700) nach einem der vorherigen Ansprüche, **dadurch gekennzeichnet, dass** der Vorsprung (108) in der Höhenrichtung um weniger als 5 Zentimeter von den Bodenbearbeitungsabschnitten (101; 102) beabstandet ist.

6. Hackschar (100; 300; 500; 700) nach einem der vorherigen Ansprüche, **dadurch gekennzeichnet, dass** die Hackschar (100; 300; 500; 700) einteilig und/oder einstückig ausgebildet ist.

7. Hackschar (100; 300; 500; 700) nach einem der vorherigen Ansprüche, **dadurch gekennzeichnet, dass** der Befestigungsabschnitt (103) mehrere Ausnehmungen (105) aufweist, die zur Befestigung der Hackschar (100; 300; 500; 700) an der Zugmaschine verwendbar sind.

8. Hackschar (100; 300; 500; 700) nach einem der vorherigen Ansprüche, **dadurch gekennzeichnet, dass** die Bodenbearbeitungsabschnitte (101; 102) einen Winkel zwischen 10° und 90°, insbesondere zwischen 20° und 50°, zwischen sich einschließen.

9. Hackschar (100; 300; 500; 700) nach einem der vorherigen Ansprüche, **dadurch gekennzeichnet, dass** die Hackschar (100; 300; 500; 700) frei von einer Schweißverbindung ist.

10. Hackschar (100; 300; 500; 700) nach einem der vorherigen Ansprüche, **dadurch gekennzeichnet, dass** zwischen dem ersten Bodenbearbeitungsabschnitt (101) und dem Übergangsabschnitt (104) eine erste Einkerbung (106) angeordnet ist.

11. Hackschar (100; 300; 500; 700) nach einem der vorherigen Ansprüche, **dadurch gekennzeichnet, dass** zwischen dem ersten Bodenbearbeitungsabschnitt (101) und dem zweiten Bodenbearbeitungsabschnitt (102) eine zweite Einkerbung (107) angeordnet ist.

12. System, umfassend eine Zugmaschine und eine Hackschar (100; 300; 500; 700) nach einem der vorherigen Ansprüche, **dadurch gekennzeichnet, dass** die Hackschar (100; 300; 500; 700) mit dem Befestigungsabschnitt (103) an der Zugmaschine befestigt ist, und wobei die Zugmaschine dazu ausgebildet ist, die Hackschar (100; 300; 500; 700) durch einen Erdboden zu ziehen.

13. System nach dem vorherigen Anspruch, **dadurch gekennzeichnet, dass** das System Befestigungselemente umfasst, wobei die Hackschar (100; 300; 500; 700) über die durch die Ausnehmungen (105) hindurch ragenden Befestigungselemente an der Zugmaschine befestigt ist.

14. Verfahren zur Bodenbearbeitung mit einem System nach einem der beiden vorherigen Ansprüche, **dadurch gekennzeichnet, dass** die Zugmaschine die Hackschar (100; 300; 500; 700) zieht, wobei die Bodenbearbeitungsabschnitte (101; 102) den Erdboden auflockern und der Vorsprung (108) den Erdboden aufbricht.

## Geänderte Patentansprüche

### Geänderte Patentansprüche gemäss Regel 137(2) EPÜ.

1. Hackschar (100; 300; 500; 700), umfassend einen Befestigungsabschnitt (103), einen Übergangsabschnitt (104) einen ersten Bodenbearbeitungsabschnitt (101) und einen zweiten Bodenbearbeitungsabschnitt (102), wobei der Befestigungsabschnitt (103) für eine Befestigung an einer Zugmaschine ausgebildet ist, wobei der Befestigungsabschnitt (103) über den Übergangsabschnitt (104) in die Bodenbearbeitungsabschnitte (101; 102) übergeht, wobei sich der Befestigungsabschnitt (103) mit seiner größten Ausdehnungsrichtung ausgehend von vom Übergangsabschnitt (104) in einer Längsrichtung nach vorne und in einer Höhenrichtung nach oben erstreckt, wobei sich die Bodenbearbeitungsabschnitte (101; 102) mit ihrer jeweiligen größten Ausdehnungsrichtung ausgehend vom Übergangsabschnitt (104) in der Längsrichtung nach hinten erstrecken, wobei die Bodenbearbeitungsabschnitte (101; 102) in einer Querrichtung ausgehend vom Übergangsabschnitt (104) auseinander laufen, wobei am Befestigungsabschnitt (103) ein sich in der Längsrichtung nach vorne erstreckender Vorsprung (108) angeordnet ist, wobei die Hackschar (100; 300; 500; 700) einteilig und/oder einstückig ausgebildet ist,
, **dadurch gekennzeichnet, dass** sich der Übergangsabschnitt (104) ausgehend vom Befestigungsabschnitt (103) mit seiner größten Ausdehnungsrichtung in der Querrichtung erstreckt.

2. Hackschar (100; 300; 500; 700) nach Anspruch 1, **dadurch gekennzeichnet, dass** die Bodenbearbeitungsabschnitte (101; 102) in einer Ebene liegen, wobei der Befestigungsabschnitt (103) aus der Ebene hervorsteht.

3. Hackschar (100; 300; 500; 700) nach einem der vorherigen Ansprüche, **dadurch gekennzeichnet, dass** der Vorsprung (108) dazu ausgebildet ist, einen Erdboden aufzubrechen, wenn die Bodenbearbeitungsabschnitte (101; 102) den Erdboden auflockern.

4. Hackschar (100; 300; 500; 700) nach einem der vorherigen Ansprüche, **dadurch gekennzeichnet, dass** der Vorsprung (108) in der Höhenrichtung um weniger als 5 Zentimeter von den Bodenbearbeitungsabschnitten (101; 102) beabstandet ist.

5. Hackschar (100; 300; 500; 700) nach einem der vorherigen Ansprüche, **dadurch gekennzeichnet, dass** der Befestigungsabschnitt (103) mehrere Ausnehmungen (105) aufweist, die zur Befestigung der Hackschar (100; 300; 500; 700) an der Zugmaschine verwendbar sind.

6. Hackschar (100; 300; 500; 700) nach einem der vorherigen Ansprüche, **dadurch gekennzeichnet, dass** die Bodenbearbeitungsabschnitte (101; 102) einen Winkel zwischen 10° und 90°, insbesondere zwischen 20° und 50°, zwischen sich einschließen.

7. Hackschar (100; 300; 500; 700) nach einem der vorherigen Ansprüche, **dadurch gekennzeichnet, dass** die Hackschar (100; 300; 500; 700) frei von einer Schweißverbindung ist.

8. Hackschar (100; 300; 500; 700) nach einem der vorherigen Ansprüche, **dadurch gekennzeichnet, dass** zwischen dem ersten Bodenbearbeitungsabschnitt (101) und dem Übergangsabschnitt (104) eine erste Einkerbung (106) angeordnet ist.

9. Hackschar (100; 300; 500; 700) nach einem der vorherigen Ansprüche, **dadurch gekennzeichnet, dass** zwischen dem ersten Bodenbearbeitungsabschnitt (101) und dem zweiten Bodenbearbeitungsabschnitt (102) eine zweite Einkerbung (107) angeordnet ist.

10. System, umfassend eine Zugmaschine und eine Hackschar (100; 300; 500; 700) nach einem der vorherigen Ansprüche, **dadurch gekennzeichnet, dass** die Hackschar (100; 300; 500; 700) mit dem Befestigungsabschnitt (103) an der Zugmaschine befestigt ist, und wobei die Zugmaschine dazu ausgebildet ist, die Hackschar (100; 300; 500; 700) durch einen Erdboden zu ziehen.

11. System nach dem vorherigen Anspruch in Abhängigkeit von Anspruch 5, **dadurch gekennzeichnet, dass** das System Befestigungselemente umfasst, wobei die Hackschar (100; 300; 500; 700) über die durch die Ausnehmungen (105) hindurch ragenden Befestigungselemente an der Zugmaschine befestigt ist.

12. Verfahren zur Bodenbearbeitung mit einem System nach einem der beiden vorherigen Ansprüche, **dadurch gekennzeichnet, dass** die Zugmaschine die Hackschar (100; 300; 500; 700) zieht, wobei die Bodenbearbeitungsabschnitte (101; 102) den Erdboden auflockern und der Vorsprung (108) den Erdboden aufbricht.
